# EUROPÄISCHE PATENTSCHRIFT

(11) **EP 0 396 005 B1**
(45) Veröffentlichungstag und Bekanntmachung des Hinweises auf die Patenterteilung: **28.07.1993**
(21) Anmeldenummer: 90107799.0
(22) Anmeldetag: 25.04.1990
(51) Int. Cl.: B65G 1/04, B65G 1/06, B66F 9/07

(54) **Hochregallager zum Ein- und Auslagern von rollenförmigem Gut, insbesondere von Papierrollen**
High shelf for stocking and destocking trochoidal goods, especially paper rolls
Rayonnage haut pour stocker et déstocker des marchandises en forme de rouleau notamment des rouleaux de papier

(30) Priorität: 02.05.1989 DE 8905526 U
(43) Veröffentlichungstag der Anmeldung: 07.11.1990
(73) Patentinhaber: COPLA FÖRDER-UND LAGERTECHNIK GESELLSCHAFT FÜR ANLAGENBAU mbH, D-12107 Berlin (DE)
(72) Erfinder: Schröder, Niels, D-2080 Pinneberg (DE)
(74) Vertreter: Richter, Werdermann & Gerbaulet

(56) Entgegenhaltungen:
- EP-A- 0 133 472
- WO-A-88/05018
- DE-A- 3 207 860
- DE-A- 3 741 411

## Beschreibung

Die Erfindung betrifft ein Hochregallager zum Ein- und Auslagern von Stückgütern, die liegend von einer Packvorrichtung über eine Förderstrecke dem Hochregallager mit in Etagen vorgesehenen Regalfächern zuführbar sind, wobei das Hochregallager aus einem Regalteil oder aus zwei unter Ausbildung eines Verteilerschachtes in einem Abstand voneinander angeordneten Regalteilen mit einer Anzahl von in Etagen neben- und übereinander angeordneten Regalfächern mit stirnseitigen bzw. im Bereich des Verteilerschachtes liegenden, stirnseitigen Öffnungen und mit einer der Länge oder dem Mehrfachen der Länge eines Stückgutes entsprechenden Länge besteht, wobei die einzelnen Etagen eines jeden Regalteiles der beiden zu beiden Seiten des Verteilerschachtes angeordneten Regalteile den Etagen des jeweils anderen Regalteiles gegenüberliegend sind, wobei in jeder Etage eines jeden Regalteiles im Bereich der stirnseitigen öffnungen eines jeden Regalfaches eine waagerechte, quer zur Regallängsrichtung verlaufende Transportbahn für Verschiebewagen als Tansportmittel angeordnet ist, wobei alle Transportbahnen einendseitig in einen oder beidendseitig in je einen Aufzug aus einem Aufzugsschacht aus einer Rahmenkonstruktion mit einer heb- und senkbaren Transportplattform münden, wobei jeder Verschiebewagen mit einem quer zur Verschiebewagenvorschubbewegung verlaufenden Guttransportwagen versehen ist, der auf in dem Verschiebewagen vorgesehenen Laufschienen verfahrbar ist und der mit einer heb- und senkbaren Tragplatte versehen ist, wobei jedes Regalfach mit einem in Regalfachlängsrichtung verlaufenden, feststehend angeordneten Gutträger und mit zu dessen beiden Seiten angeordneten Laufbahnen für den Guttransportwagen versehen ist, wobei der Gutträger aus zwei im Abstand voneinander angeordneten Tragschienen besteht, deren Abstand voneinander derart bemessen ist, daß der Guttransportwagen mit angehobener Tragplatte zwischen den Tragschienen hindurchführbar ist, und die Antriebseinrichtungen für das Verfahren der Transportmittel, der Verschiebewagen und/oder der Guttransportwagen in einem Programmsteuerwerk zusammengefaßt sind, in das auch die einzelnen Regalfächer eingespeichert sind.

Für das Lagern von Papierrollen sind zwei Lagertechniken bekannt, nämlich das Staplerlager und das Kranlager. Beim Staplerlager werden die Papierrollen nach der Verpackungs- oder Schneidmaschine ausgerichtet und vom Stapler mittels einer Klammervorrichtung aufgenommen. Mitteils des Staplers wird dann die Papierrolle zum Lagerplatz befördert, auf dem meist mehrere Papierrollen turmartig aufeinander gestapelt werden. Bei dieser Art der Lagertechnik ist eine Beschädigungsgefahr der Papierrollen durch die eingesetzten Klammervorrichtungen nicht vermeidbar. Eine weitere Beschädigungsgefahr ist durch schräges Aufsetzen der Papierrollen gegeben, die in ihren Kantenbereichen beschädigt werden können. Das turmartige Aufeinanderstapeln mehrerer Papierrollen trägt zu einer Unfallgefahr bei. Beim Kranlager werden die Papierrollen ebenfalls nach der Verpackungs- oder Schneidmaschine ausgerichtet und mittels einer Krananlage mit Vakuumheber aufgenommen. Die Krananlage fährt die einzelnen Papierrollen zum Lagerplatz, auf dem ebenfall die Papierrollen dann turmartig aufeinander gestapelt werden. Durch lagerbedingtes Kippen der Papierrollen ist eine erhöhte Beschädigungsgefahr ebenfalls gegeben.

Da eine Waggon- und LKW-Beladung mit Papierrollen immer in liegender Weise erfolgt, müssen die oben genannten herkömmlichen Lagersysteme immer ein Aufstellen und Umlegen der Papierrollen zur Erfüllung ihrer Funktionen umfassen.

Durch die DE-A-3 207 860 ist eine Fördereinrichtung für eine Lagerhausanlage bekannt, die aus einem Unterfahrwagen besteht, der zum Aufnehmen und Absetzen von Lasteinheiten mit mindestens zwei unabhängig voneinander betätigbaren Hubplattformen ausgerüstet ist. Die von je einem Trägerwagen hucke-pack getragenen Unterfahrwagen sind an den Trägerwagen auf Laufschienen in den Lagerflächen verfahrbar und laufen direkt unter den Lasteinheiten. Je ein Trägerwagen und der von ihm getragene Unterfahrwagen bilden zusammen eine horizontale Transporteinheit, die gegebenenfalls mit einer Lasteinheit vom Aufzug zwischen den Stockwerken und der Übergabestation transportiert wird und unabhängig von ihm in den Stockwerken freizügig verfahrbar ist. Durch die Aufteilung des Lastaufnahmemittels auf dem Unterfahrwagen in mindestens zwei lastkonforme Hubplattformen sollen sich effizientere Lagerungsstrategien für die Mischlagerung von Lasteinheiten mit mindestens zwei unterschiedlich großen Grundflächen ergeben. Hiernach umfaßt die Fördereinrichtung für die Lagerhausanlage ein Hochregallager zum Ein- und Auslagern von einem Gut mit einem flachen Boden, wobei das Hochregallager aus zwei unter Ausbildung eines Verteilerschachtes in einem Abstand voneinander angeordneten Regalteilen mit einer Anzahl von in Etagen neben- und übereinander angeordneten Regalfächern besteht, wobei in jeder Etage im Bereich der stirnseitigen Öffnungen der Regalfächer eine waagerechte, quer zur Regallängsrichtung verlaufende Transportbahn für Verschiebewagen angeordnet ist. Alle Transportbahnen münden dabei endseitig in einen Aufzug mit einer heb- und senkbaren Transportplattform. Die Transportbahnen und die Transportplattform weisen Laufschienen für den Verschiebewagen auf, der mit einem quer zur Vorschubbewegung des Verschiebewagens verlaufenden Guttransportwagen versehen ist, der auf in dem Verschiebewagen vorgesehenen Laufschienen verfahrbar ist und der mit einer heb- und senkbaren Tragplatte versehen ist. Jedes Regalfach ist dabei mit einem in Regalfachlängsrichtung verlaufenden, feststehend angeordneten Gutträger und mit zu dessen beiden Seiten angeordneten Laufbahnen für den Guttransportwagen versehen, wobei der Gutträger aus zwei im Abstand voneinander angeordneten Tragschienen besteht, deren Abstand voneinander derart bemessen ist, daß der Guttransportwagen mit angehobener Tragplatte zwischen den Laufschienen hindurchführbar ist. Die Antriebseinrichtungen sind in einem Programmsteuerwerk zusammengefaßt.

Die gesamte bekannte Fördereinrichtung ist so ausgelegt, daß nur Gut mit flachen Böden oder Standflächen ein- und ausgelagert werden können. Sowohl die Hubplattformen als auch die Laufschienen in den Lagerflächen können kein rollenförmiges Gut aufnehmen, schon gar nicht rollenförmige Güter mit unterschiedlichen Durchmessern, zumal die Hubplattformen der Verschiebewagen und die Lagerflächen nicht dem Umfang einer Rolle angepaßt sind. Außerdem ist nicht jede Etage des Lagerhauses bzw. des Hochregallagers mit einem Verschiebewagen versehen, so daß keine hohen Ein- und Auslagerungsgeschwindigkeiten erzielt werden können.

Der Erfindung liegt die Aufgabe zugrunde, ein Hochregallager zum Ein- und Auslagern von Stückgütern der eingangs genannten Art zu schaffen, das für das Einlagern und Auslagern von rollenförmigem Gut, insbesondere von Papierrollen geeignet ist und dem das in liegender Stellung angelieferte rollenförmige Gut in liegender Stellung zugeführt, in liegender Stellung untergebracht und in liegender Stellung dem Hochregallager entnommen werden kann, um so eine liegende Transport- und Lagerweise zu ermöglichen, so daß das rollenförmige Gut in schonender Weise bewegt wird.

Diese Aufgabe wird durch die in den Ansprüchen 1 und 2 angegebene Merkmalskombination gelöst, wobei nach dem Anspruch 1 von feststehenden Aufzugsschächten und von als Laufschienen ausgebildeten Transportbahnen für die Verteilerwagen als Transportmittel ausgegangen wird, wobei die Transportplattformen der Aufzugsschächte der Aufzüge ebenfalls mit Laufschienen für die Verteilerwagen versehen sind, während bei dem Hochregallager nach Anspruch 2 mindestens ein Aufzugsschacht als Transportmittel zwischen den beiden Regalteilen parallel zu diesen auf Laufschienen selbstfahrend verfahrbar angeordnet ist, wobei das Verfahren vermittels elektromotorischer Antriebseinrichtungen erfolgt.

Ein derart erfindungsgemäß ausgebildetes Hochregallager ermöglicht den Transport und das Lagern von Papierrollen in liegender Stellung. Ein Aufrichten der Papierrollen, um diese in eine senkrechte Stellung zu bringen, wird vermieden und ist nicht mehr erforderlich. Die in liegender Stellung vermittels geeigneter Transportmittel zugeführten Papierrollen werden in liegender Stellung den einzelnen Regalflächen des Hochregallagers zugeführt und in liegender Stellung in den einzelnen Regalfächern gelagert, wobei auch das Entnehmen der Papierrollen und Abtransportieren der Papierrollen in liegender Stellung der Papierrollen erfolgt. Der Vorteil, der sich durch die Anwendung eines derart ausgebildeten Hochregallagers ergibt, liegt darin, daß die Papierrollen, die liegend von der Rollenpackmaschine über eine Förderstrecke zum Lager gelangen, dort auch in liegender Weise aufgenommen werden, liegend innerhalb des Lagers durch die Lagerbediengeräte verfahren und ein- bzw. ausgelagert werden und ebenfalls in liegender Weise dem Lagerausgangsbereich übergeben werden. Diese liegende Transport- und Lagerweise hat den entscheidenden Vorteil, daß die Papierrollen in schonender Weise bewegt werden. Hinzu kommt, daß mit dem Hochregallager eine kompakte, raumsparende Lagerung von Papierrollen möglich ist, die Lagerbedienung automatisch durchgeführt wird und eine schonende Papierrollenbehandlung gegeben ist. Ein weiterer Vorteil besteht darin, daß das Ein- und Auslagern der Papierrollen ohne Hilfsmittel, wie Paletten od.dgl., erfolgt. Die übernahme jeder einzelnen, ankommenden Papierrolle erfolgt liegend, und zwar so wie die Papierrolle aus der Verpackung kommt, wodurch kein Kippen und senkrechtes Aufstellen mehr erforderlich ist. Aufgrund der Regalfachausgestaltung des Hochregallagers können Papierrollen mit verschiedenen Durchmessern und Breiten hintereinander gelagert werden. Da die Ladeeinheiten bis 3100 mm mit einem Lastspiel eingelagert bzw. ausgelagert werden können, ist eine sehr hohe Leistung möglich. Durch Einsetzen z.B. von achtzehn Verschiebewagen mit je einem Guttransportwagen sind problemlos 160 Einlagerungen bzw. 240 Auslagerungen von Papierrollen pro Stunde möglich. Anstelle der bekannten, über die gesamte Lagerhöhe reichende Regalförderer und Fahrzeuge sorgen kleine Verschiebewagen mit aufgesetzten Guttransportwagen, die in jeder Lagerebene installiert und nur für Horizontalfahrt und Lastenaufnahme bzw. -abgabe gebaut sind, für die Lagerbedienung. Der Einsatz einer größeren Anzahl von Fahrzeugen ermöglicht eine hohe Umschlagleistung. Ein- und Auslagerungsvorgänge können parallel durchgeführt werden. Als Lagerhilfsmittel kann eine in den Regalfächern bzw. Lagerkanälen eingebaute Profillagerkonstruktion dienen. Hinzu kommt, daß es sich bei dem durch das Hochregallager gegegebene Lagerkonzept um ein sogenanntes "Chaotisches Lager" handelt, da Papierrollen mit jedem Rollendurchmesser und jeder Rollenbreite in jedes Regalfach bzw. Lagerkanal eingelagert werden können.

Vorteilhafte Ausgestaltungen der Erfindung sind in den Unteransprüchen gekennzeichnet.

Ausführungsbeispiele der Erfindung werden nachstehend anhand der Zeichnung näher erläutert. Es zeigen
Fig. 1 in einer schaubildlichen schematischen Ansicht ein aus zwei Regalteilen bestehendes Hochregallager, wobei ein Regalteil nur abschnittsweise dargestellt ist,
Fig. 2 das aus zwei zu beiden Seiten eines Verteilerschachtes angeordneten Regalteilen bestehende Hochregallager nach Fig. 1 in einer Ansicht von oben,
Fig. 3 in einer schaubildlichen Ansicht ein aus nur einem Regalteil bestehendes Hochregallager,
Fig. 4 in einer vergrößerten Seitenansicht einen Verschiebewagen mit aufgesetztem, eine Papierrolle tragenden Guttransportwagen,
Fig. 5 in einer Vorderansicht den Verschiebewagen gemäß Fig.4,
Fig. 6 ein Regalfach mit zwei eingelagerten Papierrollen in einer Ansicht von vorn,
Fig. 7 eine Gesamtübersicht über das Hochregallager mit diesem vorgeschalteten Zulieferbahnen für die Papierrollen,

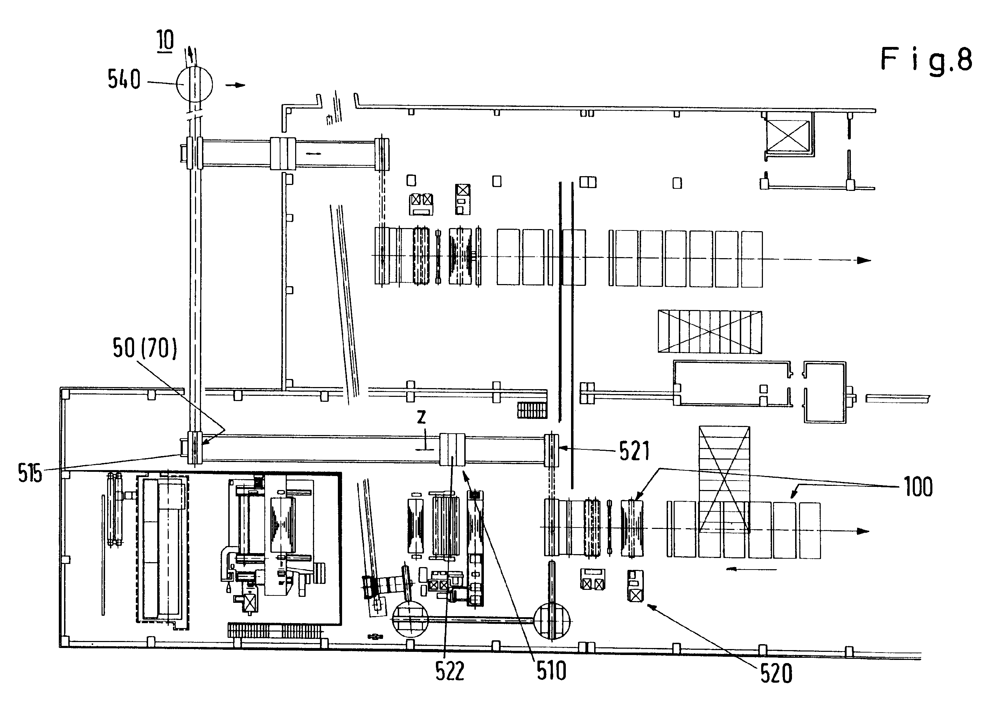

Fig. 8 eine Gesamtübersicht über das Hochregallager mit Zulieferbahnen und Papierrollenschneidvorrichtungen,
Fig. 9 in einer Seitenansicht eine Förderbrücke für die Zulieferung der Papierrollen zu dem Hochregallager und
Fig.10 einen senkrechten Schnitt gemäß Linie X-X in Fig. 9.

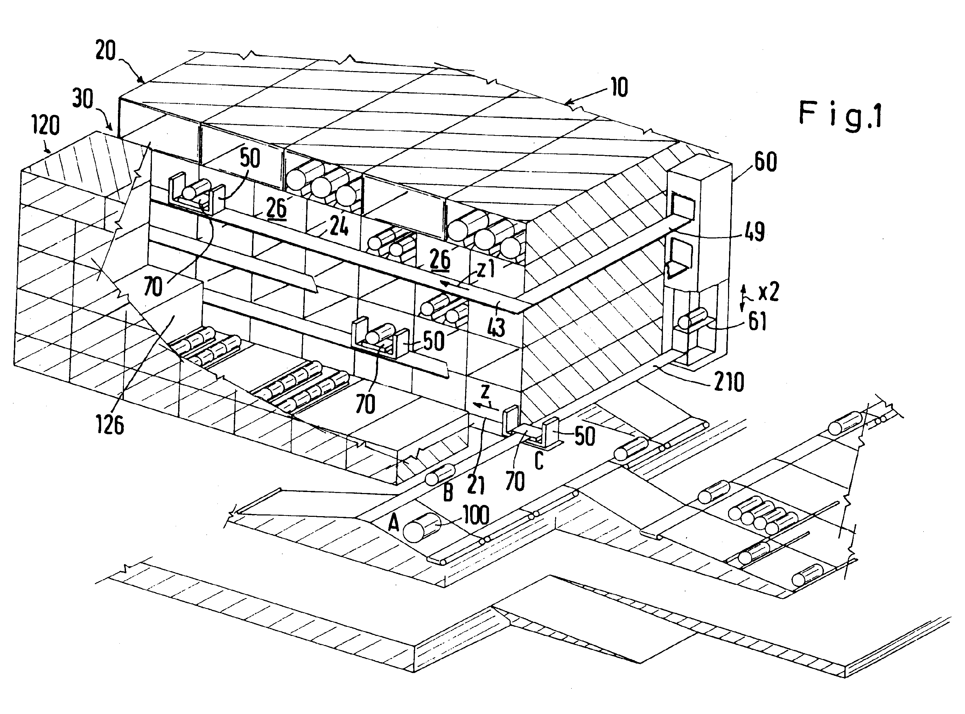

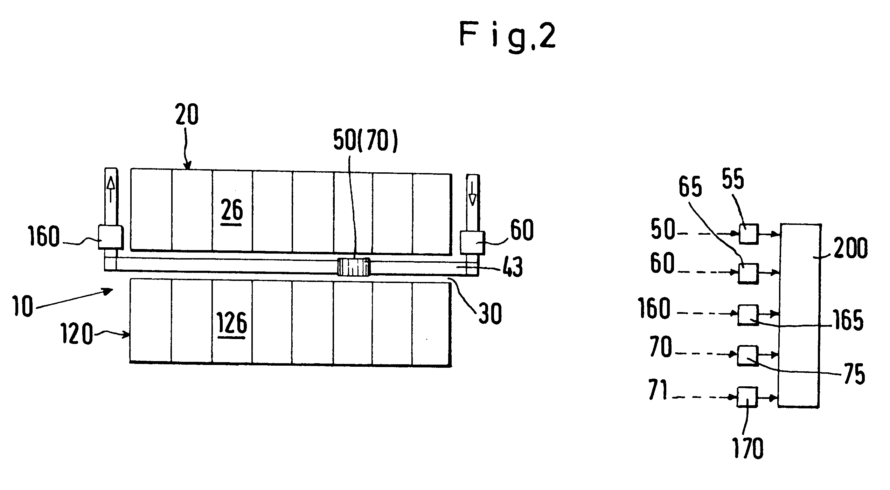

Das in Fig. 1 und 2 dargestellte und mit 10 bezeichnete Hochregallager zum Ein- und Auslagern von rollenförmigem Gut,insbesondere von Papierrollen 100 besteht aus zwei Regalteilen 20,120, die unter Ausbildung eines Verteilerschachtes 30 sich gegenüberliegend angeordnet sind, wobei die Breite des Verteilerschachtes 30 in etwa der Länge einer Papierrolle 100 entspricht.

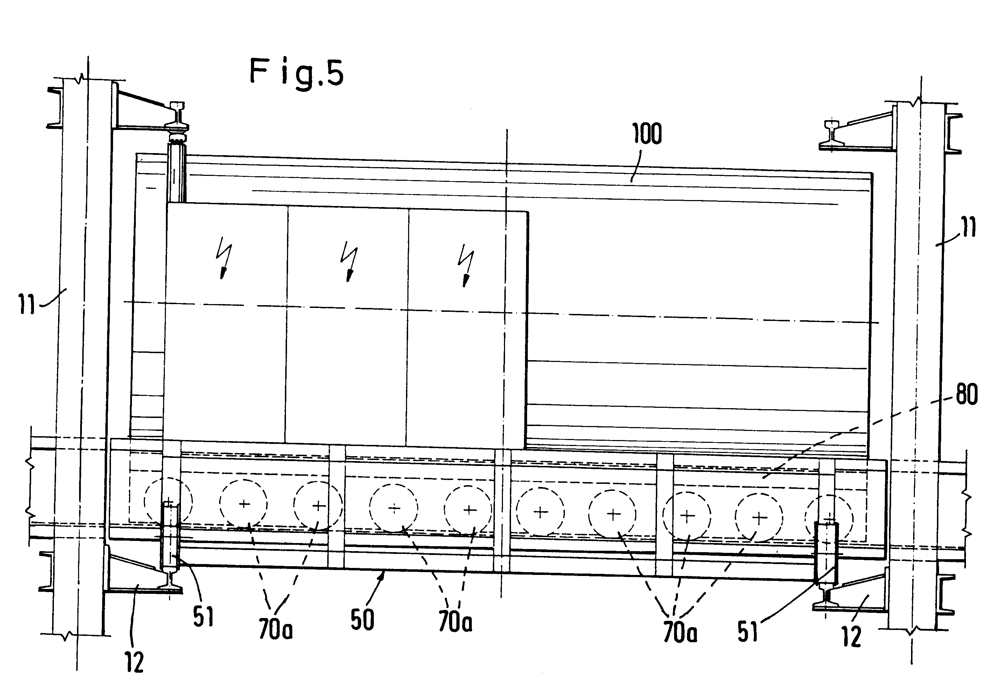

Jedes Regalteil 20,120 besteht aus senkrechten Regalpfosten 11, die über waagerechte Querträger 12 miteinander verbunden sind, so daß in den einzelnen Regalteilen 20,120 einzelne Etagen 21,22,23,24,25 ausgebildet werden. Bei dem in Fig. 1 und 2 gezeigten Ausführungsbeispiel weist jedes Regalteil 20,120 fünf Etagen auf, wobei sich die Anzahl der Etagen nach der jeweils gewünschten oder erforderlichen Lagerkapazität des Hochregallagers richtet (Fig.5). Da das Hochregallager 10 nach Art der Skelettbauweise aufgebaut ist, besteht die Möglichkeit, jedes Regalteil 20,120 seitlich oder in der Höhe zu vergrößern, falls die vorhandene Lagerkapazität nicht ausreicht und erweitert werden muß. Dabei können die einzelnen Regalteile 20,120 als Bauelemente vorgefertigt werden, um dann bau- kastenartig aneinander und/oder übereinander angeordnet werden zu können. Die das Hochregallager 10 bildende Rahmenkonstruktion ist vorzugsweise auf einer Grundplatte angeordnet.

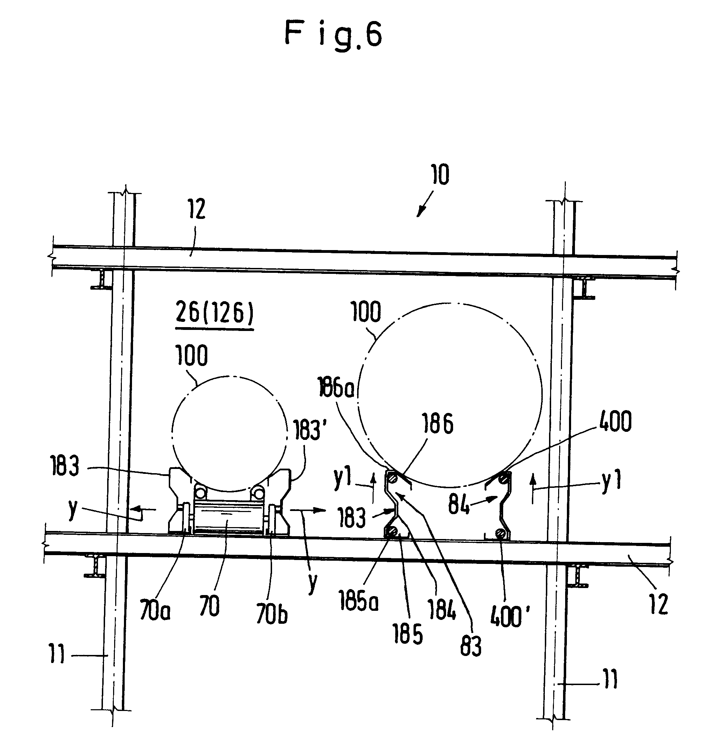

Die Etagen 21 bis 25 eines jeden Regalteils 20,120 sind nicht zueinander versetzt, sondern die Etagen der beiden Regalteile liegen in denselben Ebenen. Die senkrechten Regalpfosten 11 sind in Abständen voneinander angeordnet, so daß in jedem der beiden Regalteile 20,120 eine Vielzahl von neben- und übereinanderliegend angeordneten Regalfächern ausgebildet wird, die mit 26,126 bezeichnet sind. Die Abmessungen der einzelnen Regalfächer 26,126 , die mit ihren stirnseitigen Öffnungen 26a dem Verteilerschacht 30 zugeordnet sind, sind so gehalten, daß eine oder mehrere Papierrollen parallel zur Längsrichtung eines jeden Regalfaches 26,126 liegend sind. Die Höhe eines jeden Regalfaches 26,126 richtet sich nach dem Durchmesser der zu lagernden Papierrollen 100; die Höhe eines jeden Regalfaches 26,126 wird sich vorzugsweise nach dem größten Durchmesser der zu lagernden Papierrollen richten, so daß letztlich in jedem Regalfach auch Papierrollen mit unterschiedlichen Durchmessern gelagert werden können (Fig.6).

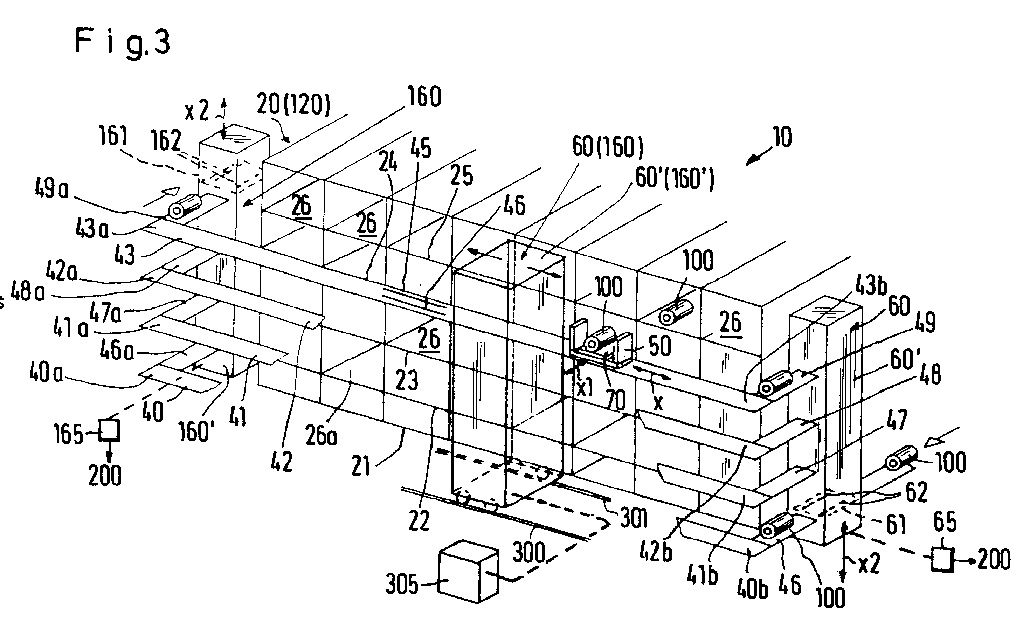

Nach dem in Fig. 1 und 2 gezeigten Ausführungsbeispiel besteht das Hochregallager 10 aus zwei zu beiden Seiten des Verteilerschachtes 30 angeordneten Regalteilen 20,120. Es besteht jedoch auch die Möglichkeit, ein Hochregallager 10 aus nur einem Regalteil 20 zu schaffen, wie dies aus Fig. 3 ersichtlich ist. Dieses nur aus einem Regalteil 20 bestehende Hochregallager 10 ist in Bezug auf sein Regalteil 20 entsprechend den Regalteilen 20,120 des in Fig. 1 und 2 dargestellten Hochregallagers 10 ausgebildet.

Die Länge eines jeden Regalfaches 26,126 der beiden Regalteile 20,120 des Hochregallagers 10 entspricht dem Mehrfachen der Länge einer Papierrolle 100, wobei jedoch auch eine Regalfachausgestaltung vorgesehen sein kann, nach der jedes Regalfach eine Länge aufweist, die der Länge einer Papierrolle 100 entspricht. Die zu beiden Seiten des Verteilerschachtes 30 angeordneten Regalteile 20,120 sind sich so gegenüberliegend angeordnet, daß die stirnseitigen öffnungen 26a der einzelnen Regalfächer 26,126 des einen Regalteils 20 mit denen des anderen Regalteils 120 korrespondieren.

In jeder Etage 21,22,23,24,25 eines jeden Regalteils 20,120 ist im Bereich der stirnseitigen öffnungen 26a eines jeden Regalfaches 26,126 eine waagerecht und quer zur Regalfachlängsrichtung verlaufende Transportbahn für mindestens einen Verschiebewagen 50 als Transportmittel für das rollenförmige Gut angeordnet. Bei dem in Fig. 3 gezeigten Ausführungsbeispiel sind den Etagen 21,22,23,24 je eine Transportbahn 40,41,42,43 zugeordnet. Die für die Etage 25 erforderliche Transportbahn ist in der Zeichnung nicht dargestellt. Die Anzahl der Transportbahnen für diese Verschiebewagen 50 richtet sich nach der Anzahl der einzelnen Etagen. Besteht das Hochregallager 10 nur aus einem Regalteil 20 bzw. 120, dann sind die Transportbahnen 40 bis 43 im Bereich der stirnseitigen öffnungen 26a der einzelnen Regalfächer 26 bzw. 126 verlaufend angeordnet. Besteht dagegen das Hochregallager 10 aus den beiden Regalteilen 20,120 , dann sind die Transportbahnen 40 bis 43 in dem zwischen den beiden Regalteilen 20,120 ausgebildeten Verteilerschacht 30 angeordnet. Da im Bereich des Verteilerschachtes 30 keine senkrechten Verschiebebewegungen durchgeführt werden, sind die Transportbahnen 40 bis 43 fest mit der Rahmenkonstruktion des Hochregallagers 10 verbunden.

Jede Transportbahn 40,41,42,43 ist mit parallel zueinander geführten Laufschienen 45,46 für die Führung der Verschiebewagen 50 versehen (Fig.3).

Die Transportbahnen 40 bis 43 münden bei der in Fig. 3 gezeigten Ausführungsform mit ihren beiden Enden 40a,41a, 42a,43a und 40b,41b,42b,43b in Aufzüge 60,160, von denen jeder Aufzug aus einem Aufzugsschacht 60',160' aus einer Rahmenkonstruktion mit einer heb- und senkbaren Transportplattform 61,161 besteht,wobei jede Transportplattform 61,161 so ausgebildet ist, daß diese mindestens einen Verschiebewagen 50 aufnehmen kann. Hierzu ist jede Transportplattform 61,161 ebenfalls mit einem Paar Laufschienen 62,161 zur Aufnahme der Verschiebewagen 50 versehen , wobei jedoch die Laufschienen 62,162 einer jeden Transportplattform 61,161 mit den Laufschienen 45,46 einer jeden Transportbahn 40,41,42,43 so in Verbindung bringbar sind, daß die Verschiebewagen 50 von den Transportbahnen auf die Transportplattform 61,161 der Aufzüge 60,160 verfahren werden können, wenn die Transportplattform in den Bereich der einzelnen Transportbahnen 40 bis 43 verfahren ist, so daß ein stufenloser Verschiebewagenüberfahrbereich erhalten wird. Jede Transportplattform 61,161 kann jedoch eine Länge aufweisen, die dem Mehrfachen der Länge eines Verschiebewagens 50 entspricht, so daß z.B. jede Transportplattform 61,161 zwei oder mehrere Verschiebewagen 50 hintereinanderstehend aufnehmen kann, um die Verschiebewagen 50 den Transportbahnen 40 bis 43 der einzelnen Regallageretagen 21 bis 25 zuführen zu können. Die Zuführung der Papierrollen 100 zu den Aufzügen 60,160 erfolgt über Transportbänder 210 (Fig.1).

Die beiden Aufzüge 60,160 sind entsprechend Fig. 3 an der Stirnseite des Regalteils 20 angeordnet. Besteht das Hochregallager 10 aus zwei Regalteilen 20,120 dann besteht die Möglichkeit, die Aufzüge 60,160 an den Enden des Verteilerschachtes 30 anzuordnen, wobei jedoch auch andere Standortspositionen für die Aufzüge 60,160 gewählt werden können. Sind die Aufzüge 60,160 an den Stirnseiten des Regalteils 20 angeordnet (Fig.1), dann sind die Transportbahnen 40 bis 43 bis in die Stirnseiten des Regalteils 20 verlängert und münden in die an den Stirnseiten des Regalteils 20 angeordneten Aufzüge 60,160. Dabei kann eine Ausgestaltung dieser Transportbahnen 40 bis 43 derart erfolgen, daß die Verschiebewagen 50 auch von den Transportplattformen 61,161 der beiden Aufzüge 60,160 aufgenommen werden können. Nach einer weiteren Ausführungsform dienen jedoch die im Bereich der stirnseitigen öffnungen 26a der Regalfächer 26,126 der Regalteile 20,120 verlaufenden Transportbahnen 40 bis 43 für das Verfahren der Verschiebewagen 50, wohingegen dann diejenigen Transportbahnenabschnitte, die im Bereich der Stirnseiten des Regalteils 20 verlaufen, als Transportbahn für Papierrollentransportwagen 70 dienen, die auf den einzelnen Verschiebewagen 50 anordbar sind, worauf nachstehend noch näher eingegangen wird. Die im Bereich der Stirnseiten des Regalteils 20 verlaufenden Transportbahnabschnitte sind in Fig. 1 mit 46,47,48,49 und 46a,47a,48a,49a bezeichnet (Fig.3).

Das senkrechte Verfahren der Transportplattformen 61,161 der beiden Aufzüge 60,160 erfolgt vorzugsweise mittels elektromotorisch betriebener Antriebseinrichtungen, die bei 65,165 angedeutet sind. Die Verfahrrichtung der beiden Transportplattformen 61,161 erfolgt in Richtung der Pfeile X2 (Fig.3). Es besteht jedoch auch die Möglichkeit, anstelle von zwei stirnseitig an dem Regalteil 20 angeordneten Aufzügen 60,160 einen einzigen Aufzug vorzusehen, in den dann ebenfalls die Transportbahnen 40 bis 43 mit oder ohne ihren Transportabschnitten 46 bis 49 und 46a bis 49a münden.

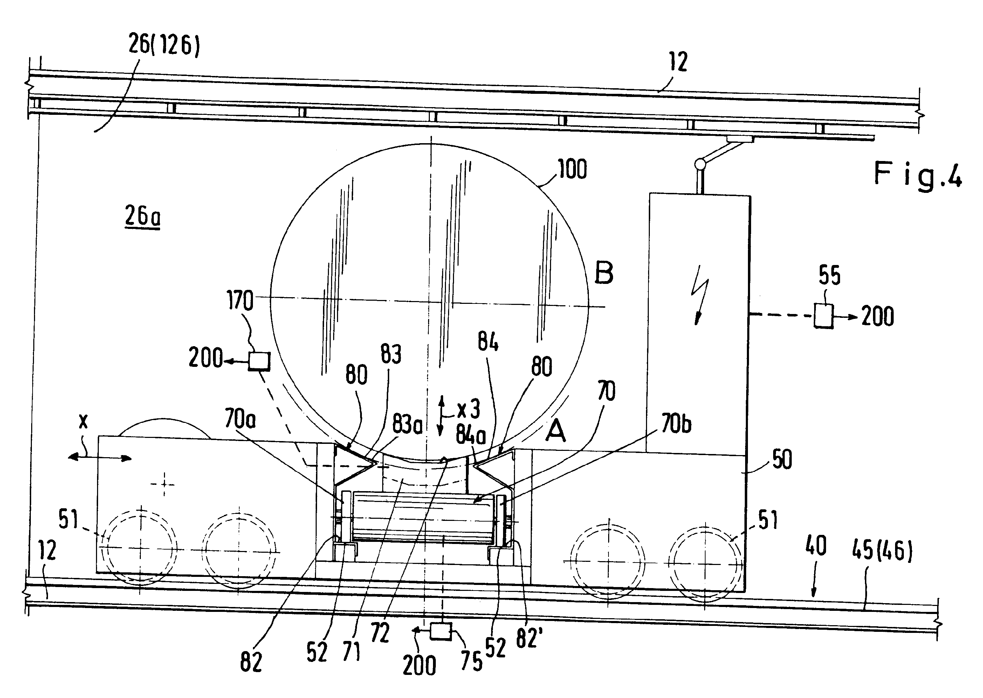

Jeder Verschiebewagen 50 ist mit einem quer zur Verschiebewagenvorschubbewegung verlaufenden Guttransportwagen 70 versehen, der huckepackartig auf dem Verschiebewagen 50 angeordnet ist (Fig.4). Um eine möglichst niedrige Bauhöhe zu erhalten, ist der Verschiebewagen 50 mittig mit einer Ausnehmung versehen, in der der Guttransportwagen 70 zu stehen kommt. Im Bereich des Standortes des Guttransportwagens 70 weist der Verschiebewagen 50 ein Paar Laufschienen 52 auf, auf denen sich der Guttransportwagen 70 mit seinen Laufrollen 70a,70b abstützt und so geführt ist, daß ein Verfahren des Guttransportwagens 70 in Pfeilrichtung X1 möglich ist (Fig. 3 und 5). Der Verschiebewagen 50 selbst ist mit Laufrollen 51 versehen, um auf den Laufschienen der Transportbahnen 40 bis 43 verfahren zu können.

Der Guttransportwagen 70 ist mit einer heb- und senkbaren Tragplatte 71 versehen. Die Hubbewegung dieser Tragplatte 71 erfolgt in Pfeilrichtung X1 (Fig.4). Die Antriebseinrichtung für die Tragplatte 71, um diese in der Höhe verfahren zu können, ist in dem Gehäuse des Guttransportwagens 70 untergebracht und mit 170 bezeichnet. Neben einem elektromotorischen Antrieb kann auch eine hydraulische Hubeinrichtung eingesetzt werden. Die Antriebseinrichtung für den Verschiebewagen 50 ist bei 55 und für den Guttransportwagen 70 bei 75 angedeutet. Alle Antriebseinrichtungen 55,65,165,75 und 170 sind in einem Programmsteuerwerk 200 zusammengefaßt, in das auch die einzelnen Regalfächer 26, 126 mit eingespeichert sind, worauf nachstehend noch näher eingegangen wird (Fig.2).

Die Tragplatte 71 des Guttransportwagens 70 weist eine Auflagefläche 72 für die einzelnen Papierrollen 100 auf, die teilkreisbogenförmig ausgebildet ist, d.h. so ausgebildet ist, daß sich die Papierrollenauflagefläche 72 dem Umfang der Papierrolle 100 anpaßt, so daß diese sicher in der von der Papierrollenauflagefläche 72 gebildeten Mulde gehalten ist (Fig.4).

Jedes Regalfach 26,126 ist mit einem in Regalfachlängsrichtung verlaufenden Gutträger 80 versehen, der feststehend in der Rahmenkonstruktion des Hochregallagers angeordnet ist. Dieser Gutträger 80 ist mit zu seinen beiden Seiten angeordneten Laufbahnen 82,82' für den Guttransportwagen 70 versehen. Diese beiden Laufbahnen 82,82' können zu beiden Seiten des Gutträgers 80, jedoch auch in die konstruktive Ausgestaltung des Gutträgers 80 mit einbezogen werden, wie dies in den Fig. 4 und 6 dargestellt ist.

Der Gutträger 80 besteht aus zwei im Abstand voneinander angeordneten Tragschienen 83,84, deren Abstützflächen 83a,84a für die Papierrolle 100 zueinander geneigt verlaufend ausgebildet sind, so daß eine Lagerfläche erhalten wird, die in etwa dem Verlauf eines Abschnittes des Umfanges einer Papierrolle entspricht, so daß von den beiden Abstützflächen 83a,84a eine schalen- bzw. muldenförmige Lagerfläche für die Papierrolle 100 geschaffen wird, die dann lagegesichert auf dem Papierrollenträger 80 gehalten wird.

Des weiteren sind die beiden Tragschienen 83,84 des Gutträgers 80 in einem Abstand voneinander angeordnet, wobei dieser Abstand derart bemessen ist, daß die Tragplatte 71 zwischen den Tragschienen 83,84 hindurchgeführt werden kann, wenn der Guttransportwagen 70 mit angehobener Tragplatte 71 durch den Gutträger 80 hindurchgeführt wird (Fig.4 und 5). Die Transportstellung der Papierrolle 100 bei angehobener Tragplatte 71 des Guttransportwagens 70 ist in Fig. 4 bei B angedeutet, während die Aufsitzstellung der Papierrolle auf dem Gutträger 80 in einem Regalfach bei A angedeutet ist.

Vermittels des Verschiebewagens 50 mit aufgesetztem Guttransportwagen 70 wird die einzelne Papierrolle 100 auf der Transportbahn der jeweiligen Etage in den Bereich der stirnseitigen Öffnung 26a desjenigen Regalfaches 26 bzw. 126 des Regalteils 20 bis 120 verfahren, in das die Papierrolle abgelegt werden soll. Hat der Verschiebewagen 50 die in Fig. 4 gezeigte Position eingenommen, dann verfährt der Guttransportwagen 70 mit der Papierrolle 100 in das Regalfach, wobei die Papierrolle mit der Tragplatte 71 angehoben ist, damit die Papierrolle oberhalb des in dem Regalfach angeordneten Gutträgers 80 bis zu seiner Ablagestellung in das Regalfach verfahren werden kann. Hat der Guttransportwagen 70 die für die Papierrolle vorgesehene Ablageposition eingenommen, dann wird der Gutträger 80 abgesenkt, und zwar soweit, bis die Papierrolle auf den Tragschienen 83,84 des Gutträgers 80 aufsitzt. Der Guttransportwagen 70 wird dann mit eingefahrener Tragplatte 71 in den Bereich der stirnseitigen öffnung des betreffenden Regalfaches verfahren und an den zwischenzeitlich bereitgestellten Verschiebewagen 50 übergeben, der dann somit zur übernahme und Aufnahme einer erneuten Papaierrolle zur Verfügung steht.

Die Gutträger 80 in den einzelnen Regalfächern 26,126 können sich über die gesamte Länge der Regalfächer erstrecken. Es besteht jedoch auch die Möglichkeit, bei sehr lang bemessenen Regalfächern kürzere Abschnitte des Gutträgers 80 unter Beibehaltung von Abständen hintereinanderliegend in Reihe anzuordnen, und zwar derart, daß ausreichende Lager- und Abstützflächen für die Papierrollen erhalten werden. Es besteht jedoch auch die Möglichkeit, in jedem einzelnen Regalfach 26,126 nur einen Gutträger 80 oder mehrere Gutträger 80 nebeneinanderliegend anzuordnen. Bei dem in Fig. 5 gezeigten Ausführungsbeispiel sind in dem Regalfach zwei Gutträger 80 angeordnet. Bei diesem Ausführungsbeispiel sind die Gutträger 80 unterschiedlich bemessen ausgebildet, um Papierrollen mit unterschiedlichem Durchmesser aufnehmen zu können.

Jede Tragschiene 83,84 besteht aus einem Profilkörper 183, der etwa U-förmig ausgebildet ist und einen senkrechten Steg 184, einen unteren waagerechten Schenkel 185 und einen oberen, geneigt ausgebildeten Schenkel 186 aufweist, wobei die beiden, die Tragschienen 83,84 bildenden Profilkörper 183 sich mit ihren Schenkeln 185,186 derart gegenüberliegend angeordnet sind, daß die unteren, einander zugekehrten Schenkel 185 die Laufbahnen 82 für den Guttransportwagen 70 und die oberen, schräg zueinander verlaufenden Schenkel 186 die Abstützflächen 83a,84a für die Papierrolle 100 bilden (Fig.5). Vorteilhafterweise sind die beiden gleich ausgebildeten Profilkörper 183,183' in ihrem Abstand voneinander in Pfeilrichtung Y veränderbar. Hinzu kommt, daß jeder Profilkörper 183,183' zweigeteilt ausgebildet sein kann, wobei dann der jeweils obere Teil eines jeden Profilkörpers 183,183' in Pfeilrichtung Y1 nach oben verschiebbar ist, so daß die Grundabmessungen der Profilkörper 183,183' so abgeändert werden können, daß auch Papierrollen 100 mit einem größeren Durchmesser sicher auf dem Gutträger 80 gelagert und gehalten werden können. Die Tragschienen 83,84 bzw. die Profilkörper 183,183' können auch eine andersartige Ausgestaltung aufweisen.

Sowohl der Verschiebewagen 50 als auch der Guttransportwagen 70 sind mit einem elektromotorisch betriebenen Fahrmotor versehen; jedoch auch andersartig ausgebildete Antriebseinrichtungen können zur Anwendung gelangen.

Das Hochregallager 10 kommt wie folgt zur Anwendung: Soll in dem freien Regalfach 26 in der Etage 24 des Regalteils 20 des Hochregallagers 10 eine Papierrolle 100 gelagert werden, so wird diese Papierrolle gemäß Fig.1 über ein vorgeschaltetes System von Transportbändern u.dgl. von der Position A der Transportbahn 210 zugeführt. In der Position C steht im Bereich der Transportbahn 210 ein Verschiebewagen 50 mit aufgesetztem Guttransportwagen 70 bereit, und zwar derart, daß die Papierrolle von der Position B direkt der Tragplatte 71 des Guttransportwagens 70 zugeführt werden kann. Vorzugsweise nimmt dabei die Tragplatte 71 des Guttransportwagens 70 ihre niedrigste Stellung ein, damit eine einwandfreie übernahme der Papierrolle gewährleistet ist. Soll diese Papierrolle auf dem Guttransportwagen 70 einem Regalfach in der Etage 21 zugeführt werden, dann verfährt der Verschiebewagen 50 in Pfeilrichtung Z auf der untersten Transportbahn 40 bis in den Bereich des Regalfaches 26, in dem die Papierrolle abgelegt werden soll. Da aber bei dem hier aufgezeigten Beispiel die Papierrolle 100 in das Regalfach 26 der Etage 24 zugeführt werden soll, wird die Papierrolle auf dem Guttransportwagen 70 liegend zusammen mit diesem der Transportplattform 61 des Aufzuges 60 zugeführt und vermittels des Aufzuges bis zur Etage 24 transportiert und dann auf dem Transportbahnabschnitt 49 zur Transportbahn 43 bewegt, auf der ein Verschiebewagen 50 zur übernahme des Guttransportwagens 70 zur Verfügung steht. Nach übernahme des Guttransportwagens 70 wird der Verschiebewagen 50 in Pfeilrichtung Z1 auf der Transportbahn 43 verschoben, und zwar bis in den Bereich der stirnseitigen öffnung 26a desjenigen Regalfaches 26, in das die Papierrolle 100 abgelegt werden soll. Der Verschiebewagen 50 hat dann im Bereich dieses Regalfaches seine Endfahrposition erreicht und verweilt dort solange, bis der Guttransportwagen 70 in das Regalfach verfahren ist. Für das Verfahren des Guttransportwagens 70 in das Regalfach wird die Tragplatte 71 mit der auf dieser angeordneten Papierrolle angehoben, woraufhin dann der Guttransportwagen 70 in das Regalfach hineingleitet und bis zum Erreichen derjenigen Position vorbewegt wird, in der die Papierrolle auf dem Gutträger 80 abgesetzt wird. Die Tragplatte 71 des Guttransportwagens 70 wird dann abgesenkt, wobei gleichzeitig die Papierrolle auf den beiden Tragschienen abgesetzt wird. Mit eingefahrener Tragplatte 71 wird dann der Guttransportwagen 70 in den Ausgangsbereich dieses Regalfaches bewegt und wird von einem bereitgestellten Verschiebewagen aufgenommen und wieder in die unterste Beladeposition verfahren, um eine erneute Papierrolle aufnehmen zu können. In gleicher Weise wie das Beschicken der einzelnen Regalfächer erfolgt, erfolgt auch das Auslagern der Papierrollen aus dem Hochregallager.

Der Transport der Papierrolen 100 kann nach übernahme von den Guttransportwagen 70 bis in den Bereich der Transportbahnen 40 bis 43 ohne Verschiebewagen 50 erfolgen. Erst wenn die Guttransportwagen 70 mit den Papierrollen 100 die Transportbahnen 40 bis 43 erreicht haben, erfolgt eine übernahme der Guttransportwagen 70 durch die Verschiebewagen 50, von denen aus dann die Guttransportwagen 70 in die einzelnen Regalfächer 26,126 verfahren werden. Um die Papierrollen ablegen zu können, besteht jedoch auch die Möglichkeit, von der Papierrollenaufgabestation die auf den Guttransportwagen 70 angeordneten Papierrollen zusammen mit den Verschiebewagen 50 bis in den Bereich der Regalfächer zu verfahren.

Der den Regalteilen 20,120 zugeordnete Aufzugsschacht 60', 160' ist an dem einen Ende der Transportbahnen 40 bis 43 feststehend angeordnet. Um dem Verteilerschacht 30 eine möglichst geringe Breite geben zu können, ist der Aufzugsschacht 60',160' seitlich vor dem Verteilerschacht angeordnet, wobei die vor den Regalteilen 20,120 verlaufenden Transportbänder 40 bis 43 über quer zu diesen verlaufende Transportbänder 46 bis 49 in den Aufzugsschacht 60',160' geführt sind. Es besteht jedoch auch die Möglichkeit, den Aufzugsschacht 60',160' im oder vor dem Verteilerschacht 30 anzuordnen, wobei der Aufzugsschacht 60',160' feststehend ausgebildet sein kann. Nach einer weiteren Ausführungsform ist ein Aufzugsschacht 60',160' als Transportmittel für das rollenförmige Gut in dem Verteilerschacht 30 verfahrbar angeordnet. Das Verfahren in dem Verteilerschacht 30 zwischen den beiden sich gegenüberliegenden Regalteilen 20,120 in Regallängsrichtung erfolgt auf Laufschienen 300,301 vermittels bei 305 angedeuteter elektromotorischer Antriebseinrichtungen (Fig.3). Auch ist es möglich, den Aufzugsschacht 60',160' selbstfahrend auszubilden, so daß auch ein Verfahren aus dem Regalbereich möglich ist. Bei denjenigen Ausführungsformen, bei denen der Aufzugsschacht 60',160' in dem Verteilerschacht 30 in Regallängsrichtung verfahrbar ist, sind in dem Verteilerschacht 30 keine Transportbänder 40 bis 43 vorgesehen, damit der Aufzugsschacht 60',160' frei verfahren werden kann.

Der Vorteil bei der Verwendung eines in dem Verteilerschacht 30 verfahrbar angeordneten Aufzugsschachtes 60', 160', der eine der Höhe der Regalteile 20,120 entsprechende Höhe aufweist, liegt in einem schonenden Papierrollentransport. Bei der Verwendung von Stetigförderern in Form von Transportbändern 40 bis 43 vor den beiden Regalteilen muß, wenn Transportgut bewegt wird, immer das gesamte Band eingeschaltet werden. Hinzu kommt das mehrfache übergeben der Papierrollen und eine mögliche oder sogar erforderliche Zwischenlagerung. Diese entfällt. Die Papierrollen werden einmal aufgelegt und am Ziel abgelegt.

Die Tragschienen 83,84 nach der in Fig. 4 gezeigten Ausführungsform weisen frei auskragende Papierrollenauflageschenkel 186 auf, die aufgrund ihrer freiauskragenden Ausgestaltung ein gewisses Federungsvermögen aufweisen. In den Hauptbelastungsbereichen, also in den Verbindungsbereichen der Auflageschenkel 186 für die Papierrollen mit den senkrechten Stegen 184 bzw. in den Verbindungsbereichen der senkrechten Stege 184 mit den waagerechten Schenkeln 185, erfolgt eine hohe Materialbeanspruchung, die sich aufgrund der aufzunehmenden hohen Gewichte ergibt, die die einzelnen Papierrollen aufweisen. Aus diesem Grunde sind in diesen Verbindungsbereichen, und zwar innenseitig, in Tragschienenlängsrichtung verlaufende Versteifungsprofile 400 bzw. 400' vorgesehen, die ein kreisförmiges Querschnittsprofil aufweisen (Fig.6). Diese Versteifungsprofile 400,400' tragen zu einer Erhöhung der Stabilität und Bruchfestigkeit bei, ohne daß dabei die Elastizität der Auflageschenkel 186 beeinträchtigt wird. Außerdem können die Versteifungsprofile 400,400' auch rohrförmig ausgebildet sein. Ferner können die Versteifungsprofile 400,400' auch als nach außen hin geschützte Stromabnehmer für die Fahrmotoren der Guttransportwagen 70 verwendet werden.

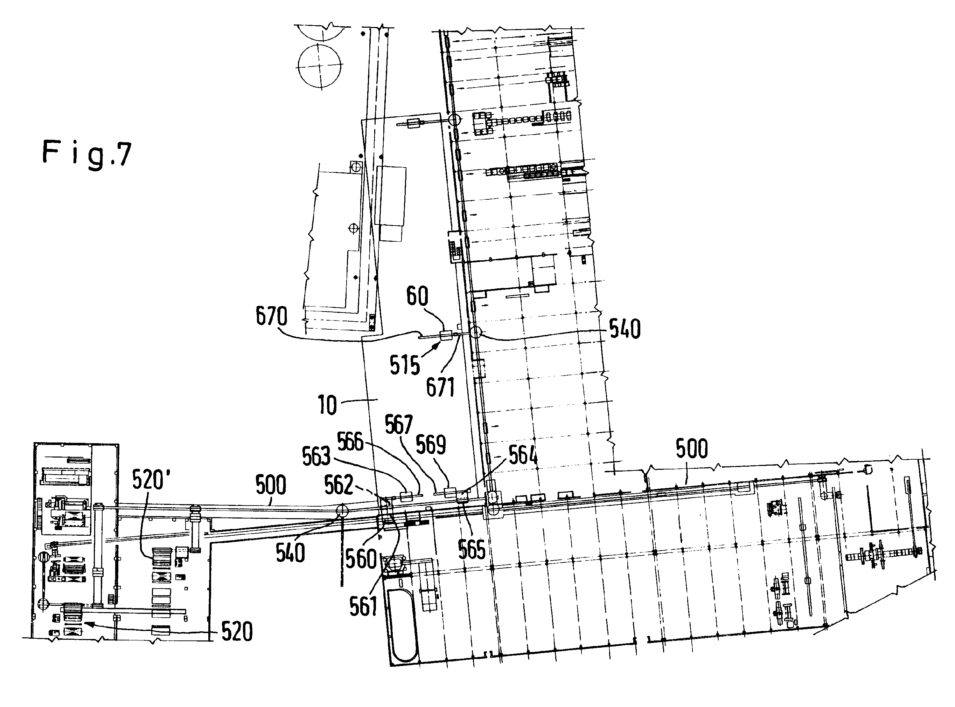

Fig. 7 zeigt eine Gesamtübersicht einer Anlage, die ein Hochregallager 10 mit Zuführbahnen 500 für die Papierrollen 100 umfaßt. Dabei ist zu berücksichtigen, daß der Papierrollenanfall im ungünstigsten Fall als Einzelrolle zum Einlagern in das Hochregallager 10 transportiert werden muß. Gehen die Rollen zum Versand, so können die Rollen zu Transporteinheiten zusammengefaßt werden, die eine Packlänge von 3,2 m nicht überschreiten sollten.

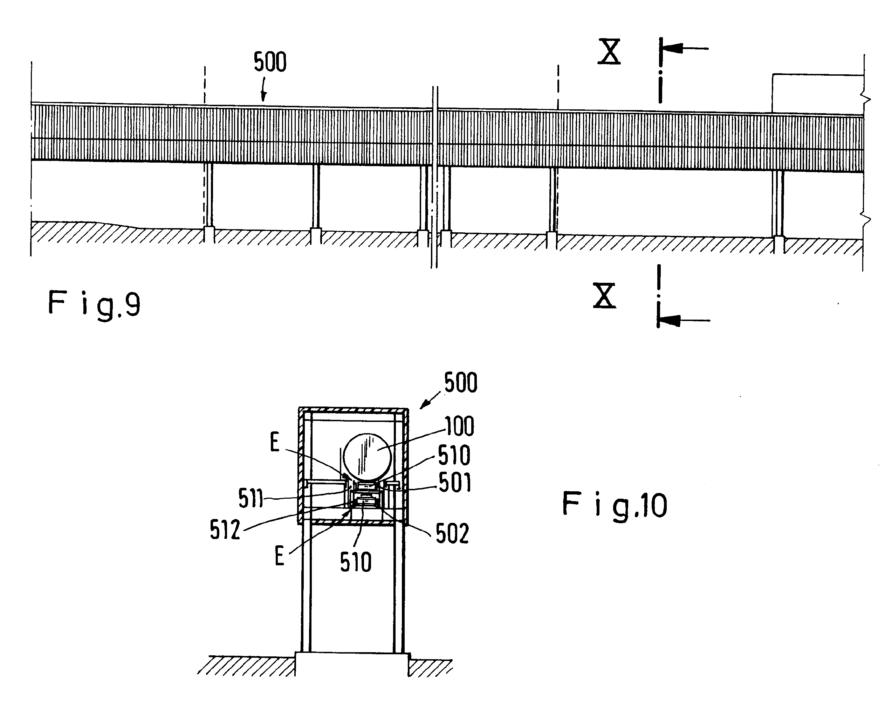

Den Transport der Papierrollen von der Papierfabrik zum Hochregallager 10 übernehmen unabhängig voneinander fahrende Tranpsportwagen 510. Dies sind Transportwagen mit eigenem Antrieb und Steuerung, die in doppelstöckigen Fahrschienen 501,502 fahren (Fig.9 und 10). In der unteren Ebene E1 fahren die Transportfahrzeuge als Leerfahrzeug auf dem Rückweg und in der oberen Ebene E2 als beladenes Fahrzeug. Nach dem Entladen des Transportfahrzeuges wird dieses an einer materialflußtechnisch günstigen Stelle über eine Hubstation von der oberen in die untere Ebene umgesetzt und kann dann gegenläufig zurückfahren. Hierdurch ist sichergestellt, daß die Transportwagen 510 im ständigen Kreisverkehr nach Quelle-Zielfunktion und der jeweiligen Frequenz im Einsatz sind. Die Zuführbahnen für die Papierrollen sind vorzugsweise als Förderbrücken ausgebildet (Fig.9).

Überbrückungen von Höhen erfolgen über Vertikalförderer 515, so daß die Papierrollen nach dem Aufgeben auf die Transportwagen erst wieder im Hochregallager bewegt werden.

Die gesamte Förderstrecke wird z.B. von dreizehn Transportwagen 510 versorgt, wobei davon ausgegangen wird, daß Rollen, die für das Hochregallager bestimmt sind, als Einzelrolle gefahren werden. Transportwagen, die das Hochregallager beschicken, werden direkt bei den Einlagerungspunkten umgesetzt, um schnell wieder für eine Rollenaufnahme bereit zu sein.

Sollten die Rollen zum Versand bestimmt sein, so wird mit der maximalen Ladeeinheit, die auf einen Transportwagen paßt, gefahren.

Da parallel hierzu noch die Querschneidervorrichtungen 520 mit Papierrollen versorgt werden müssen, werden noch weitere Transportwagen benötigt. Der Rollentransport im Einlager- und Auslagerbereich erfolgt ebenfalls durch im Vertikalförderer stationär angeordnete Transportwagen. Das Ein- und Auslagern der Papierrollen im Hochregallager erfolgt per Verfahrenwagen und Satellit, die mit einer eigenen Steuerung ausgerüstet sind.

Die Gesamtanlage wird wie folgt verwendet:

Die aus der Rollenschneidvorrichtung 520 kommenden Rollen werden übr die Rollenablagestation 521 auf einen Taktschlitten übergeben. Die Rollen werden durch zwei, unabhängig voneinander wirkenden, fahrbaren Hubbalken getrennt. Jeder Hubbalken ist mit einer Rollenhaltevorrichtung ausgerüstet, um die zu trennenden Rollen gegen Verrutschen zu sichern. Hierdurch können Einzelrollen getaktet, signiert und ausgestoßen werden oder vereinzelt signiert und wieder zu Ladeeinheiten von max. 3,2 m zusammengestellt werden. Bei Einzelrollen wird an der vorderen Stirnseite (in Förderrichtung) gestempelt. Bei aufzutaktenden Ladeeinheiten wird je eine Rolle/Takt an der Vorderseite und eine andere Rolle auf der Rückseite gestempelt.

Ist eine Ladeeinheit zusammengestellt, so wird diese vom Taktschlitten auf einen Verschiebewagen 522 mit Kippvorrichtung und Hänger gekippt. Dieser verfährt in Pfeilrichtung Z bis zur Transportwagen-Förderstrecke und übergibt die Rolle auf das Transportwagen-Ladeprofil und -hubstation, das bei 523 angedeutet ist. Hier fährt der Guttransportwagen unter die Rolle, nimmt diese mit seiner Hubeinrichtung auf und fährt auf der oberen Fahrschiene 501 zu dem vorgegebenen Ziel (Fig.10).

Die Rollenschneidvorrichtungen 520,520' haben die gleiche Einrichtung. In der Förderstrecke zu der Rollenschneidvorrichtung 520' ist ein Drehtisch 540 vorgesehen, der den Winkelausgleich von ca. 6° zwischen Papierfabrik und Ausrüstung/Hochregallager ausgleicht und auch gleichzeitig für die spätere Anbindung der Förderstrecke von weiteren Rollenschneidvorrichtungen vorgesehen ist (Fig.7).

Die von den Rollenschneidvorrichtungen 520,520' kommenden Papierrollen werden über einen Ausstoßer 560, über die Ablaufbahn 561 mit Stopper und Anrollhilfen in eine Hubstation 562, in der ein Transportwagen 510 steht, gerollt. Von dieser Station kann die Rolle entweder über die Kippvorrichtung auf die weiterführende Ablaufbahn in die als Fänger ausgebildeten Fahrprofile vor dem Vertikalförderer 563 gekippt werden oder mit Hilfe der Hydraulik in dem Transportwagen angehoben werden.

Der Transportwagen verfährt in den doppelstöckigen Fahrprofilen (Fig.10) auf der oberen Ebene E1 vor die Ablaufbahn 564. Hier wird die Rolle mit dem Ausstoßer 565 über die Ablaufbahn mit Stopper in die als Fänger ausgebildeten Fahrprofile vor dem Vertikalförderer 569 übergeben. Der Transportwagen wird nun in der Hubstation auf die untere Fahrprofilebene gehoben und fährt zurück zu der Hubstation 562; hier wird er wieder mit der Hubstation auf die obere Ebene angehoben und kann von neuem Rollen übernehmen. In diesem Kreislauf befinden sich zwei Transportwagen (Fig.7).

Die Plattform des Vertikalförderers 563 fährt vor das verlängerte Fahrprofil der Ablaufbahn. Der auf der Plattform befindliche Transportwagen fährt aus und unter die Rolle, hebt seine Plattform an und übernimmt somit die Rolle; dann fährt er zurück zum Vertikalförderer, der jetzt in die vom Rechner vorgegebene Ebene fährt. Der Transportwagen nimmt die Rolle wieder auf, fährt in das Fahrprofil 566 ein und setzt die Papierrolle auf das Profil ab. Dieses Fahr- und Auflagerprofil dient als Stauplatz. Der Transportwagen fährt zurück in den Vertikalförderer und übernimmt in der Einlagerungsebene die nächste Rolle.

Die gleichen Funktionen können auch mit der Ablaufbahn 564, dem Vertikalförderer 569 mit dem Transportwagen und dem Stauplatz 567 gefahren werden.

Der Verschiebewagen 50 mit dem Guttransportwagen 70 fährt nun vor den Stauplatz, der Guttransportwagen fährt unter die Rolle, hebt sie an und fährt zurück auf den Verschiebewagen; hier wird die Rolle auf das Fahr- und Auflagerprofil des Verschiebewagens während des Verfahrens abgesetzt. Der Verschiebewagen fährt nun vor den vom Rechner vorgegebenen Kanal, der Guttransportwagen nimmt die Rolle wieder auf und fährt in den Lagerkanal ein. Hier setzt er die Rolle auf den vom Rechner vorgebenen Platz ab und fährt dann auf den Verschiebewagen zurück.

Das Auslagern von Papierrollen erfolgt in der Weise, daß der Verschiebewagen 50 mit dem Guttransportwagen 70 vor den vom Rechner vorgegebenen Regalkanal fährt; der Guttransportwagen 70 fährt in die Gasse ein, hebt seine Plattform nach Erreichen des Lagerplatzes an und übernimmt so die Papierrolle, fährt zurück zum Verschiebewagen und setzt die Rolle auf die Auflagerprofile des Verschiebewagens ab. Der Verschiebewagen verfährt auf Schienen zu einem Stauplatz 670 vor den Vertikalförderer 60. Der Guttransportwagen hebt die Rolle an, fährt in das Fahr- und Auflagerprofil ein, setzt die Rolle ab und fährt zurück auf den Verschiebewagen. Dieser fährt nun zum nächsten Regalkanal oder zu einem Vertikalförderer der Einlagerung, um eine neue Rolle aufzunehmen.

Der Vertikalförderer 60 fährt nun in die gleiche Ebene, der Guttransportwagen 70 des Vertikalförderers fährt in das Profil ein, hebt die Rolle an und fährt zurück in den Vertikalförderer. Dieser fährt nun in die Auslagerungsebene, dort fährt der Transportwagen 510 mit der Rolle in das Fahrprofil 671 ein und setzt die Rolle ab. In diesem Fahrprofil bewegt sich ein Transportwagen 510, der die Rolle nun übernimmt, in das Fahr- und Auflagerprofil des Drehtisches 540 einfährt und dort absetzt. Der Transportwagen 510 fährt zurück in das Fahrprofil.

Das Umlagern von Papierrollen innerhalb einer Ebene ist mit Hilfe der Verschiebewagen 50 und der Guttransportwagen 70 möglich.

## Patentansprüche

1. Hochregallager zum Ein- und Auslagern von Stückgütern, die liegend von einer Packvorrichtung über eine Förderstrecke dem Hochregallager mit in Etagen vorgesehenen Regalfächern zuführbar sind, wobei
a) das Hochregallager (10) aus einem Regalteil (20) oder aus zwei unter Ausbildung eines Verteilerschachtes (30) in einem Abstand voneinander angeordneten Regalteilen (20,120) mit einer Anzahl von in Etagen (21,22,23,24,25) neben- und übereinander angeordneten Regalfächern (26,126) mit stirnseitigen bzw. im Bereich des Verteilerschachtes (30) liegenden, stirnseitigen öffnungen (26a) und mit einer der Länge oder dem Mehrfachen der Länge eines Stückgutes (100) entsprechenden Länge besteht, wobei die einzelnen Etagen (21 bis 25) eines jeden Regalteiles (20;120) der beiden zu beiden Seiten des Verteilerschachtes (30) angeordneten Regalteile (20;120) den Etagen des jeweils anderen Regalteiles gegenüberliegend sind,
b) in jeder Etage (21;22;23;24;25) eines jeden Regalteiles (20;120) im Bereich der stirnseitigen öffnungen (26a) eines jeden Regalfaches (26,126) eine waagerechte, quer zur Regallängsrichtung verlaufende Transportbahn (40;41;42;43) für Verschiebewagen (50) angeordnet ist, wobei alle Transportbahnen (40 bis 43) einendseitig in einen oder beidendseitig (40a,41a,42a,43a;40b,41b,42b,43b) in je einen Aufzug (60;160) aus einem Aufzugsschacht (60',160') aus einer Rahmenkonstruktion mit einer heb- und senkbaren Transportplattform (61;161) münden,
c) jeder Verschiebewagen (50) mit einem quer zur Verschiebewagenvorschubbewegung verlaufenden Guttransportwagen (70) versehen ist, der auf in dem Verschiebewagen (50) vorgesehenen Laufschienen (52) verfahrbar ist und der mit einer heb- und senkbaren Tragplatte (71) versehen ist,
d) jedes Regalfach (26;126) mit einem in Regalfachlängsrichtung verlaufenden, feststehend angeordneten Gutträger (80) und mit zu dessen beiden Seiten angeordneten Laufbahnen (82,82') für den Guttransportwagen (70) versehen ist, wobei der Gutträger (80) aus zwei im Abstand voneinander angeordneten Tragschienen (83,84) besteht, deren Abstand voneinander derart bemessen ist, daß der Guttransportwagen (70) mit angehobener Tragplatte (71) zwischen den Tragschienen (83,84) hindurchführbar ist, und
e) die Antriebseinrichtungen (65,165;55;75) für das Verfahren der Transportplattformen (61,161) der Aufzüge (60,160), der Verschiebewagen (50) und der Guttransportwagen (70) in einem Programmsteuerwerk (200) zusammengefaßt sind, in das auch die einzelnen Regalfächer (26,126) eingespeichert sind,
dadurch gekennzeichnet, daß
f) die Tragplatte (71) des Guttransportwagens (70) zur Aufnahme von rollenförmigem Gut, insbesondere von Papierrollen mit einer teilkreisbogenförmigen Auflagefläche (72) versehen ist,
g) die Tragschienen (83,84) des Gutträgers (80) zum Ein- und Auslagern von rollenförmigem Gut, insbesondere von Papierrollen mit zueinander geneigt verlaufenden Abstützflächen (83a, 84a) mit dem Umfang einer Papierrolle entsprechenden Lagerflächen versehen sind, wobei jede Tragschiene (83;84) aus einem Profilkörper (183,183') besteht, der etwa U-förmig mit einem senkrechten Steg (184) und einem unteren waagerechten Schenkel (185) und einem oberen, geneigt ausgebildeten Auflageschenkel (186) besteht, wobei die beiden, die Tragschienen (83,84) bildenden Profilkörper (183,183') sich mit ihren Schenkeln (185,186) derart gegenüberliegend angeordnet sind , daβ die unteren Schenkel (185) die Laufbahnen (82,82') für den Guttransportwagen (70) und die oberen Schenkel (186) die Abstützflächen (83a,84a) bildend sind,
h) die beiden, die Tragschienen (83,84) bildenden, in ihren Längen veränderbaren Profilkörper (183, 183') in ihrem Abstand voneinander veränderbar ausgebildet sind,
i) jeder Etage (21 bis 25) eines jeden Regalteiles (20;120) ein Verschiebewagen (50) zugeordnet ist,
j) jeder Aufzugsschacht (60';160') des mit einer Transportplattform (61;161) mit Laufschienen (45,46) für die Verschiebewagen (50) versehenen Aufzuges (60;160) feststehend und seitlich vor dem Verteilerschacht (30) angeordnet ist, wobei die von der den Regalteilen (20;120) verlaufenden Transportbahnen (40 bis 43), die als Laufschienen (45,46) für die Verschiebewagen (50) ausgebildet sind, über quer zu den Transportbahnen (40 bis 43) verlaufende Transportbahnen (46 bis 49) in den Aufzugsschacht (60';160') geführt sind.

2. Hochregallager zum Ein- und Auslagern von Stückgütern, die liegend von einer Packvorrichtung über eine Förderstrecke dem Hochregallager mit in Etagen vorgesehenen Regalfächern zuführbar sind, wobei
a) das Hochregallager (10) aus einem Regalteil (20) oder aus zwei unter Ausbildung eines Verteilerschachtes (30) in einem Abstand voneinander angeordneten Regalteilen (20,120) mit einer Anzahl von in Etagen (21,22,23,24,25) neben- und übereinander angeordneten Regalfächern (26,126) mit stirnseitigen bzw. im Bereich des Verteilerschachtes (30) liegenden, stirnseitigen öffnungen (26a) und mit einer der Länge oder dem Mehrfachen der Länge einer Papierrolle (100) entsprechenden Länge besteht, wobei die einzelnen Etagen (21 bis 25) eines jeden Regalteiles (20;120) der beiden zu beiden Seiten des Verteilerschachtes (30) angeordneten Regalteile (20;120) den Etagen des jeweils anderen Regalteils gegenüberliegend sind,
b) im Bereich der stirnseitigen öffnungen (26a) eines jeden Regalfaches (26,126) ein quer zur Regallängsrichtung verlaufendes Transportmittel angeordnet ist,
c) das Transportmittel mit einem quer zur Transportmittelvorschubbewegung verlaufenden Guttransportwagen (70) versehen ist, der auf in dem Transportmittel vorgesehenen Laufschienen (52) angeordnet ist und der mit einer heb- und senkbaren Tragplatte (71) versehen ist,
d) jedes Regalfach (26;126) mit einem in Regalfachlängsrichtung verlaufenden, feststehend angeordneten Gutträger (80) und mit zu dessen beiden Seiten angeordneten Laufbahnen (82,82') für den Guttransportwagen (70) versehen ist, wobei der Gutträger (80) aus zwei im Abstand voneinander angeordneten Tragschienen (83,84) besteht, deren Abstand voneinander derart bemessen ist, daß der Guttransportwagen (70) mit angehobener Tragplatte (71) zwischen den Tragschienen (83,84) hindurchführbar ist, und
e) die Antriebseinrichtungen (65,165;55;75) für das Verfahren des Transportmittels und der Guttransportwagen (70) in einem Programmsteuerwerk (200) zusammengefaßt sind, in das auch die einzelnen Regalfächer (26,126) eingespeichert sind, dadurch gekennzeichnet, daß
f) die Tragplatte (71) des Guttransportwagens (70) zur Aufnahme von rollenförmigem Gut, insbesondere von Papierrollen, mit einer teilkreisbogenförmigen Auflagefläche (72) versehen ist,
g) die Tragschienen (83,84) des Gutträgers (80) zum Ein- und Auslagern von rollenförmigem Gut mit zueinander geneigt verlaufenden Abstützflächen (83a, 84a) mit dem Umfang einer Papierrolle entsprechenden Lagerflächen versehen sind, wobei jede Tragschiene (83;84) aus einem Profilkörper (183,183') besteht, der etwa U-förmig mit einem senkrechten Steg (184) und einem unteren waagerechten Schenkel (185) und einem oberen, geneigt ausgebildeten Auflageschenkel (186) besteht, wobei die beiden, die Tragschienen (83,84) bildenden Profilkörper (183, 183') sich mit ihren Schenkeln (185,186) derart gegenüberliegend angeordnet sind, daß die unteren Schenkel (185) die Laufbahnen (82,82') für den Guttransportwagen (70) und die oberen Schenkel (186) die Abstützflächen (83a,84a) bildend sind,
h) die beiden, die Tragschienen (83,84) bildenden, in ihren Längen veränderbaren Profilkörper (183,183') in ihrem Abstand voneinander veränderbar ausgebildet sind,
i) das Transportmittel besteht aus mindestens einem Aufzugsschacht (60';160'), der zwischen den beiden Regalteilen (20;120) parallel zu diesen auf Laufschienen (300,301) selbstfahrend verfahrbar angeordnet ist, wobei das Verfahren vermittels elektromotorischer Antriebseinrichtungen (305) erfolgt.

3. Hochregallager nach einem der Ansprüche 1 und 2, dadurch gekennzeichnet, daß das Hochregallager (10) aus einer auf einer Grundplatte angeordneten Rahmenkonstruktion besteht.

4. Hochregallager nach einem der Ansprüche 1 bis 3, dadurch gekennzeichnet, daß der Verteilerschacht (30) zwischen zwei Regalteilen (20,120) eine Breite aufweist, die der Länge einer Papierrolle (100) entspricht.

5. Hochregallager nach Anspruch 1, dadurch gekennzeichnet, daß jeder Verschiebewagen (50) und jeder auf diesem huckepackartig getragene Guttransportwagen (70) mit einem elektromotorisch betriebenen Fahrmotor versehen ist.

6. Hochregallager nach einem der Ansprüche 1 bis 5, dadurch gekennzeichnet, daß die Tragplatte (71) eines jeden Guttransportwagens (70) mittels einer hydraulisch oder elektromotorisch betriebenen Einrichtung höhenverfahrbar ist.

7. Hochregallager nach einem der Ansprüche 1 bis 6, dadurch gekennzeichnet, daß der Auflageschenkel (186) einer jeden Tragschiene (83;84) in seinem Verbindungsbereich (186a) mit seinem senkrechten Steg (184) und/oder im Verbindungsbereich (185a) des senkrechten Steges (184) mit dem waagerechten Schenkel (185) ein in Tragschienenlängsrichtung verlaufendes Versteifungsprofil (400;400') aufweist, das innenseitig befestigt ist und das als Profilkörper mit einem kreisförmigen Querschnittsprofil ausgebildet ist.

8. Hochregallager nach einem der Ansprüche 1 bis 7, dadurch gekennzeichnet, daß jede Tragschiene (83;84) aus einem U-förmigen Profilkörper (383) besteht, wobei die von dem jeweils oberen (384) und dem jeweils unteren Profilschenkel (385) gebildete öffnung (386) der beiden Profilkörper sich gegenüberliegend angeordnet sind, und daß der obere Profilkörperschenkel (384) einen eine bogenförmig verlaufende Papierrollenabstützfläche (391) aufweisenden Formkörper (390) trägt, der aus Holz, Kunststoff oder anderen geeigneten Werkstoffen besteht.

## Claims

1. High shelf for stocking and destocking bulk goods which can be supplied reposingly from a packaging means via a conveying track to the high shelf with compartments provided in tiers, wherein
a) the high shelf (10) comprises one shelf portion (20) or two shelf portions (20,120) disposed at a distance from each other while forming a distributor shaft (30), said shelf portions being provided with a plurality of shelf compartments (26,126) disposed in tiers (21,22, 23,24,25) in side-by-side arrangements or on top of each other having front end openings (26a) or having front end openings (26a) located within the area of the distributor shaft (30) and possessing a length corresponding to the length or to a the multiple of a length of a piece of bulk goods (100), in which the individual tiers (21 to 25) of each shelf portion (20, 120) of the shelf portions (20,120) disposed on both sides of the distributor shaft (30), are located opposite the tiers of the respective other shelf portion;
b) in each tier (21;22;23;24;25) of each shelf portion (20;120) within the area of the front end openings (26,126), a horizontal conveying track (40;41;42;43) proceeding transversally to the longitudinal direction of the shelf for displacement carriages (50) is disposed, in which case all conveying tracks (40 to 43) terminate at one end into one or, at both ends (40a,41a,42a,43a;40b,41b,42b,43b) in one elevator each (60;160) of an elevator shaft (60',160') comprised of a frame structure housing having a raisable and lowerable conveying platform (61;161);
c) each displacement carriage (50) is provided with a goods conveying carriage (70) proceeding transversely to the advance movement of the displacement carriage which can be displaced on the running tracks (52) provided in the displacement carriage (50) and which is provided with a raisable and lowerable supporting plate (71);
d) each shelf compartment (26;126) is provided with a stationarily disposed goods carrying means (80) proceeding in the longitudinal direction of the shelf and with track runways (82,82') on the two sides of the same for the goods conveying carriage (70), in which case the goods carrying means (80) is comprised of two supporting rails (83,84) arranged so as to be spaced apart from each other, whose mutual distance is dimensioned in such way that the goods conveying carriage (70) with raised supporting plate (71) is able to travel between the supporting rails (83,84), and
e) the driving means (65,165;55;75) for the displacement of the conveying platforms (61,161) of the elevators (60,160) of the displacement carriages (50) and of the goods conveying carriages (70) are combined into a program control system (200), in which also the individual shelf compartments (26,126) are stored, characterized in that
f) the supporting plate (71) of the goods conveying carriage (70), for the accommodation of trochoidal goods, especially paper rolls, is provided with a pitch circle-like supporting surface (72);
g) the supporting rails (83,84) of the goods carrying means (80) for the stocking and destocking of trochoidal goods, especially paper rolls with supporting areas (83a,84a) proceeding so as to be inclined towards each other are provided with storage surfaces corresponding to the circumference of a paper roll, in which case each supporting rail (83;84) comprises a sectional member (183, 183') which is comprised of an approximately U-shaped vertical web (184) and a lower horizontal leg (185) and an upper, inclinedly constructed supporting leg (186), in which the two sectional members (183,183') which form the supporting rails (83,84) are disposed in such a way located so that their legs are oppositely located in such a way that the lower legs (185) for the track runways (82,82') of the goods conveying carriage (70) and the upper legs (186) form the supporting area (83a,84a);
h) the two sectional members (183,183') forming the supporting rails (83,84) which are variable in their lengths are constructed so as to be variable in their distance from each other;
i) each tier (21 to 25) of each shelf portion (20;120) has a displacement carriage (50) assigned to it;
j) each elevator shaft (60;16 ) of the elevator (60;160) provided with a conveying platform (61;161) with track runways (45,46) for the displacement carriages (50) is disposed stationarily and laterally in front of the distributor shaft (30), while the conveying tracks (40 to 43) proceeding from the shelf portions (20;120), which are constructed in the form of track runways (45,46) for the displacement carriages (50), are guided via conveying tracks (46 to 49) proceeding transversally to the conveying tracks (40 to 43) in the elevator shaft (60;160).

2. High shelf for stocking and destocking bulk goods which can be supplied reposingly from a packaging means via a conveying track to the high shelf with shelf compartments provided in tiers, in which
a) the high shelf (10) comprises one shelf portion (20) or two shelf portions (20,120) disposed at a distance from each other while forming a distributor shaft (30), said shelf portions being provided with a plurality of shelf compartments (26,126) disposed in tiers (21,22, 23,24,25) in side-by-side arrangement or on top of each other having front end openings (26a) or having front end openings (26a) located within the area of the distributor shaft (30) and possessing a length which corresponds to the length or the multiple of a length corresponding to the length of a paper roll (100), in which the individual tiers (21 to 25) of each shelf portion (20;120) of the two shelf portions (20;120) disposed on both sides of the distributor shaft (30), are located opposite the tiers of the respective other shelf portion;
b) within the area of the front end openings (26a) of each shelf compartment (26,126), a conveying means is disposed which proceeds transversally to the longitudinal direction of the shelf;
c) the conveying means is provided with a goods conveying carriage (70) proceeding transversally to the advance movement of the conveying means, which is disposed upon running tracks (52) provided in the conveying means and which is provided with a raisable and lowerable supporting plate (71);
d) each shelf compartment (26;126) is provided with a stationarily disposed goods carrying means (80) proceeding in the longitudinal direction of the shelf and having track runways (82,82') disposed on both sides of the latter for the goods conveying carriage (80) is comprised of two supporting rails (83,84) disposed at a distance from each other, whose mutual distance is dimensioned in such a way that the goods conveying carriage 870) with the supporting plate (71) in the raised position, is able to travel between the supporting rails (83,84), and
e) the driving means (65,165;55;75) for the displacement of the conveying means and of the goods conveying carriage (70) are combined into a program control system (200), in which also the individual shelf compartments (26,126) are stored,
characterized in that
f) the supporting plate (71) of the goods conveying carriage (70), for the accommodation of trochoidal goods, especially of paper rolls, is provided with a pitch circle-like supporting area (72);
g) the supporting rails (83,84) of the goods conveying carriage (80), for stocking and destocking trochoidal goods, are provided with supporting surfaces (83a,84a) proceeding in an inclined manner relative to each other and provided with storage areas that correspond to the circumference of a paper roll, in which case each supporting rail (83;84) comprises a sectional member (183, 183') which is comprised of an approximately U-shaped vertical web (184) and a lower horizontal leg (185) and an upper slopingly constructed supporting leg (186), in which the two profile members (183,183') which form the supporting rails (83,84) are disposed in such a way located so that their legs are oppositely located that the lower legs (185) form the track runways (82,82') of the goods conveying carriage (70) and the upper legs (186) form the supporting areas (83a,84a);
h) the two sectional members (183,183') which form the supporting rails (83,84) which are variable in their lengths are constructed so as to be variable in their distance to each other;
i) the conveying means comprises at least one elevator shaft (60';160') which is disposed so as to be displaced in a self-propelled manner between the two shelf portions (20;120) parallel to the same on track runways (300,301), the displacement being effect in this case with the aid of electromotive driving means (305).

3. High shelf according to any of Claims 1 and 2, characterized in that the high shelf (10) is comprised of a frame structure mounted on a base plate.

4. High shelf according to any of Claims 1 to 4, characterized in that the distributor shaft (30), between two shelf portions (20,120), possesses a length which corresponds to the length of a paper roll (100).

5. High shelf according to Claim 1, characterized in that each displacement carriage (50) and each goods conveying carriage (70) carried on the latter in a piggy-back-like manner is provided with an electromotively driven motor.

6. High shelf acccrding to any of Claims 1 to 5, characterized in that the supporting plate (71) of each goods conveying carriage (70) is vertically displaceable with the aid of a hydraulically or electromotively operated means.

7. High shelf according to any of Claims 1 to 6, characterized in that the supporting leg (186) of each supporting rail (83;84), within its connection area (186a) within its vertical web (184) and/or within the connection area (185a) of the vertical web (184) possesses a sectional reinforcing member (400;400') proceeding with the horizontal leg (185) in the direction of the longitudinal direction of the supporting rail, which is attached on the inside and which, in the form of a sectional member, is constructed so as to possess a circular cross-sectional profile.

8. High shelf according to any of Claims 1 to 7, characterized in that each supporting rail (83;84) comprises a U-shaped sectional member (383), in which the opening (386) of the two sectional members formed by the in each case upper (384) and the in each case lower sectional leg (385) are disposed so as to be located opposite each other, and in that the upper sectional member leg (384) carries a shaped member (390) having an arcuately proceeding paper roll supporting area (391), said shaped member (390) being comprised of wood, plastic or some other suitable material.

## Revendications

1. Rayonnage haut pour stocker et déstocker des marchandises de détail qui peuvent être amenées à plat à partir d'un dispositif d'emballage par une voie de transport au rayonnage haut avec des rayons prévus en étages,
a) le rayonnage haut (10) étant constitué par une partie de rayonnage (20) ou par deux parties de rayonnage (20, 120) placées à un certain écart l'une de l'autre en formant un puits de distribution (30) avec un nombre de rayons (26, 126) placés en étages (21, 22, 23, 24, 25) à côté et au-dessus les uns des autres avec des ouvertures (26a) côté face ou côté face situés dans la zone du puits de distribution (30) et avec une longueur qui correspond à la longueur ou au multiple de la longueur d'une marchandise isolée (100), les différents étages (21 à 25) de chacune des parties de rayonnage (20; 120) des deux parties de rayonnage (20 ; 120) placées des deux côtés du puits de distribution (30) étant situés en face des étages de l'autre partie de rayonnage respective,
b) une bande transporteuse (40 ; 41 ; 42 ;43) pour chariot de déplacement (50), qui est horizontale et transversale par rapport au sens longitudinal des rayons, étant placée dans chaque étage (21 ; 22 ; 23 ; 24 ; 25) de chacune des parties de rayonnage (20 ; 120) dans la zone des ouvertures côté face (26a) de chacun des rayons (26, 126), toutes les bandes transporteuses (40 à 43) aboutissant à l'une de leurs extrémités dans un élévateur (60 ; 160) ou à leurs deux extrémités (40a, 41a, 42a, 43a ; 40b, 41b, 42b, 43b) dans chacun des élévateurs constitué par une cage d'élévateur (60', 160') constituée par une construction à cadre avec une plateforme de transport (61 ; 161) qui peut être soulevée et abaissée,
c) chaque chariot de déplacement (50) étant pourvu d'un chariot de transport de marchandises (70) transversal par rapport à l'avancement du chariot de déplacement, chariot de transport qui peut se déplacer sur des rails de roulement (52) prévus dans le chariot de déplacement (50) et qui est pourvu d'une plaque porteuse (71) qui peut être soulevée et abaissée,
d) chaque rayon (26 ; 126) étant pourvu d'un support de marchandises (80) placé de manière fixe dans le sens longitudinal des rayons et de voies de roulement (82, 82') placées de ses deux côtés pour le chariot de transport de marchandises (70), le support de marchandises (80) étant constitué par deux rails de support (83, 84) placés en étant écartés l'un de l'autre, dont l'écart l'un par rapport à l'autre est dimensionné de telle manière que le chariot de transport des marchandises (70) peut passer avec sa plaque porteuse (71) soulevée entre les rails de support (83, 84) et
e) les organes d'entraînement (65, 165 ;55 ;75) pour le déplacement des plateformes de transport (61, 161) des élévateurs (60, 160), des chariots de déplacement (50) et des chariots de transport de marchandises (70) étant réunis dans un dispositif de commande à programme (200) dans lequel les différents rayons (26, 126) sont également mis en mémoire,
**caractérisé en ce** que
f) la plaque porteuse (71) du chariot de transport de marchandises (70) est pourvue d'une surface d'assise en forme d'arc de cercle partiel (72) pour recevoir des marchandises en forme de rouleau, en particulier des rouleaux de papier,
g) les rails de support (83, 84) du support de marchandises (80) sont pourvus, pour stocker et déstocker des marchandises en forme de rouleau, en particulier des rouleaux de papier, de surfaces d'appui (83a, 84a) inclinées l'une vers l'autre avec des aires de stockage correspondant au périmètre d'un rouleau de papier, chaque rail de support (83 ; 84) étant constitué par un corps profilé (183, 183') qui est à peu près en forme de U et qui est constitué par une traverse verticale (184), par un montant horizontal inférieur (185) et un montant d'assise supérieur (186) formé en étant incliné, les deux corps profilés (183, 183') qui forment les rails de support (83, 84) étant placés en face l'un de l'autre avec leurs montants (185, 186) de telle manière que les montants inférieurs (185) forment les voies de roulement (82, 82') pour le chariot de transport de marchandises (70) et les montants supérieurs (186) les surfaces d'appui (83a, 84a),
h) les deux corps profilés (183, 183') dont la longueur peut être variée et qui forment les rails de support (83, 84) sont configurés de manière à pouvoir faire varier l'écart de l'un par rapport à l'autre,
i) un chariot de déplacement (50) est affecté à chaque étage (21 à 25) de chacune des parties de rayonnage (20 ;120),
j) chaque puits d'élévateur (60' 160') de l'élévateur (60; 160) pourvu d'une plateforme de transport (61 ; 161) avec des rails de roulement (45, 46) pour les chariots de déplacement (50) est placé de manière fixe et latéralement devant le puits de distribution (30), les bandes transporteuses (40 à 43) partant des parties de rayonnages (20 ; 120), qui sont configurées comme des rails de roulement (45, 46) pour les chariots de déplacement (50), étant guidées dans le puits d'élévateur (60' ; 160') par des bandes de transport (46 à 49) transversalement par rapport aux bandes de transport (40 à 43).

2. Rayonnage haut pour stocker et déstocker des marchandises de détail qui peuvent être amenées à plat à partir d'un dispositif d'emballage par une voie de transport au rayonnage haut avec des rayons prévus en étages,
a) le rayonnage haut (10) étant constitué par une partie de rayonnage (20) ou par deux parties de rayonnage (20, 120) placées à un certain écart l'une de l'autre en formant un puits de distribution (30) avec un nombre de rayons (26, 126) placés en étages (21, 22, 23, 24, 25) à côté et au-dessus les uns des autres avec des ouvertures (26a) côté face ou côté face situés dans la zone du puits de distribution (30) et avec une longueur qui correspond à la longueur ou au multiple de la longueur d'un rouleau de papier (100), les différents étages (21 à 25) de chacune des parties de rayonnage (20 ; 120) des deux parties de rayonnage (20 ; 120) placées des deux côtés du puits de distribution (30) étant situés en face des étages de l'autre partie de rayonnage respective,
b) un moyen de transport étant placé transversalement par rapport au sens longitudinal des rayons dans la zone des ouvertures côté face (26a) de chacun des rayons (26, 126),
c) le moyen de transport étant pourvu d'un chariot de transport de marchandises (70) transversal par rapport à l'avancement du moyen de transport, chariot de transport qui est placé sur des rails de roulement (52) prévus dans le moyen de transport et qui est pourvu d'une plaque porteuse (71) qui peut être soulevée et abaissée,
d) chaque rayon (26 ; 126) étant pourvu d'un support de marchandises (80) placé de manière fixe dans le sens longitudinal des rayons et de voies de roulement (82, 82') placées de ses deux côtés pour le chariot de transport de marchandises (70), le support de marchandises (80) étant constitué par deux rails de support (83, 84) placés en étant écartés l'un de l'autre, dont l'écart l'un par rapport à l'autre est dimensionné de telle manière que le chariot de transport des marchandises (70) peut passer avec sa plaque porteuse (71) soulevée entre les rails de support (83, 84) et
e) les organes d'entraînement (65, 165 ; 55 ; 75) pour le déplacement du moyen de transport et des chariots de transport de marchandises (70) étant réunis dans un dispositif de commande à programme (200) dans lequel les différents rayons (26, 126) sont également mis en mémoire,
**caractérisé en ce** que
f) la plaque porteuse (71) du chariot de transport de marchandises (70) est pourvue d'une surface d'assise en forme d'arc de cercle partiel (72) pour recevoir des marchandises en forme de rouleau, en particulier des rouleaux de papier,
g) les rails de support (83, 84) du support de marchandises (80) sont pourvus, pour stocker et déstocker des marchandises en forme de rouleau, en particulier des rouleaux de papier, de surfaces d'appui (83a, 84a) inclinées l'une vers l'autre avec des aires de stockage correspondant au périmètre d'un rouleau de papier, chaque rail de support (83 ; 84) étant constitué par un corps profilé (183, 183') qui est à peu près en forme de U et qui est constitué par une traverse verticale (184), par un montant horizontal inférieur (185) et un montant d'assise supérieur (186) formé en étant incliné, les deux corps profilés (183, 183') qui forment les rails de support (83, 84) étant placés en face l'un de l'autre avec leurs montants (185, 186) de telle manière que les montants inférieurs (185) forment les voies de roulement (82, 82') pour le chariot de transport de marchandises (70) et les montants supérieurs (186) les surfaces d'appui (83a, 84a),
h) les deux corps profilés (183, 183') dont la longueur peut être variée et qui forment les rails de support (83, 84) sont configurés de manière à pouvoir faire varier l'écart de l'un par rapport à l'autre,
i) le moyen de transport est constitué par au moins un puits d'élévateur (60' ; 160') qui est placé en étant déplaçable de manière automotrice entre les deux parties de rayonnage (20 ; 120) parallèlement à celles-ci sur des rails de roulement (300, 301), le déplacement se faisant au moyen de dispositifs d'entraînement électromoteurs (305).

3. Rayonnage haut selon l'une des revendications 1 et 2, **caractérisé en ce** que le rayonnage haut (10) est constitué par une construction à cadre placée sur une plaque de base.

4. Rayonnage haut selon l'une des revendications 1 à 3, **caractérisé en ce** que le puits de distribution (30) entre deux parties de rayonnage (20, 120) a une largeur qui correspond à la longueur d'un rouleau de papier (100).

5. Rayonnage haut selon la revendication 1, **caractérisé en ce** que chaque chariot de déplacement (50) et chaque chariot de transport de marchandises (70) porté en califourchon sur celui-ci est pourvu d'un moteur de translation actionné de manière électromotrice.

6. Rayonnage haut selon l'une des revendications 1 à 5, **caractérisé en ce** que la plaque porteuse (71) de chacun des chariots de transport de marchandises (70) est déplaçable en hauteur avec un dispositif actionné de manière hydraulique ou électromotrice.

7. Rayonnage haut selon l'une des revendications 1 à 6, **caractérisé en ce** que le montant d'assise (186) de chacun des rails porteurs (83 ; 84) présente, dans sa zone de jonction (186a) avec sa traverse verticale (184) et/ou dans la zone de jonction (185a) de la traverse verticale (184) avec le montant horizontal (185), un profilé de renforcement (400 ; 400') dans le sens longitudinal des rails porteurs qui est fixé sur la face intérieure et qui est configuré comme un corps profilé avec un profil de section circulaire.

8. Rayonnage haut selon l'une des revendications 1 à 7, **caractérisé en ce** que chaque rail porteur (83 ; 84) est constitué par un corps profilé en forme de U (383), l'ouverture (386) des deux corps profilés qui est formée respectivement par le montant supérieur du profilé (384) et le montant inférieur du profilé (385) étant placée l'une en face de l'autre et que le montant supérieur du corps profilé (384) porte un corps moulé (390) en bois, en matière plastique ou en autres matériaux appropriés qui présente une surface d'appui pour les rouleaux de papier (391) en forme d'arc.
